(19) Europäisches Patentamt

European Patent Office

Office européen des brevets

(11) **EP 2 384 076 B1**

(12) **EUROPEAN PATENT SPECIFICATION**

(45) Date of publication and mention
of the grant of the patent:
**02.01.2013 Bulletin 2013/01**

(21) Application number: **10380060.3**

(22) Date of filing: **28.04.2010**

(51) Int Cl.:
**_H04W 72/08_** _(2009.01)_

(54) **Method for selecting a transmission channel within a time division multiple access (TDMA) communications system**

Verfahren zur Auswahl eines Übertragungskanals innerhalb eines Kommunikationssystems mit Mehrfachzugriff im Zeitmultiplex

Procédé de sélection d'un canal de transmission dans un système de communications à accès multiple de division de temps (TDMA)

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**02.11.2011 Bulletin 2011/44**

(73) Proprietor: **Basque Center for Applied Mathematics**
**48009 Bilbao (Bizkaia) (ES)**

(72) Inventors:
 • **Jacko, Peter**
  **48009 Bilbao (Bizkaia) (ES)**
 • **Urtzi, Ayesta**
  **48100 Mungia (Bizkaia) (ES)**

(74) Representative: **Urteaga Simarro, José Antonio**
 **31, Principe de Vergara St.**
 **28001 Madrid (ES)**

(56) References cited:
 **EP-A1- 1 473 957    US-B1- 6 449 490**

## Description

### Technical field

The invention refers to a method for selecting a transmission channel within a Time Division Multiple Access (TDMA) communications system, when several channels (each characterized by a variable and measurable quality of transmission parameter) are demanding to be active for a specific time slot.

### State of the art

Time Division Multiple Access (TDMA) is a technology that divides a communications link into time slots in order to allow the communications link to be shared by different users, thereby improving the efficiency of the link.
TDMA is particularly, but not only, used in digital cellular telephone communications, specifically between the base station and the mobile devices. Usually, base stations are responsible of transmitting and receiving information to/ from a high number of mobile devices located inside their respective cells. In consequence, base stations must perform certain specific methods and calculations to determine which mobile device (channel) is assigned each time slot.
Several methods for selecting a transmission channel, amongst a group of available transmission channels, within a time division multiple access (TDMA) communications system are known in the art.
For example, patent no. US6449490 describes several methods for selecting and granting communication over a time slot to a specific transmission channel amongst a group of available transmission channels. One of the methods, which will be referred to as method A in the ensuing, comprises the following steps at every step **t:**

- Receiving for each channel **i** an indication of the quality of transmission **C** of said channel for each time slot **t.**

- Storing the quality of transmission **C** for each channel **i for** each time slot **t,** during a predefined time window comprising a specific number of slots **T.**

- Calculating the average quality of transmission **D** for each channel i during said predefined time window **T,** as follows:

$$D_i = \frac{1}{T}\sum_{k=1}^{T} C_i(t-k)$$

- Calculating the ratio between the current value of the quality of transmission of each channel and the average quality of service of the channel during the window **T,** known as current position **P,** as follows:

$$P_i = \frac{C_i(t)}{D_i}$$

- Selecting the channel j whose value of current position **P** is maximum, as follows:

$$j = \arg\max(P_i)$$

This method, therefore, selects the channel whose current quality of service is relatively high compared to its average quality of service in the past time window **T.**
Another example is the method shown in EP1473957, referred as method B in the ensuing, where the channel selection is performed by a different method comprising the following steps at every step **t:**

- Receiving for each channel **i** an indication of the quality of transmission **C** of said channel for each time slot **t.**

- Storing the quality of transmission **C** for each channel i for each time slot **t,** during a predefined time window comprising a specific number of slots **T.**

- For each channel i, resetting a counter **D** to zero.

- Performing a loop, where for each loop index **k** (where **k** is from 1 to time window **T**), firstly, a test is made to check if the quality of transmission of the current timeslot is lower than the quality of transmission of a timeslot **k-timeslots** past away, as follows:

$$C_i(t-k) > C_i(t);$$

and, secondly, if the previous test result is true, the counter **D** is incremented in one unit, as follows:

$$D_i = D_i + 1$$

- Calculating the position **P** for each channel i as follows:

$$P_i = \frac{1}{D_i}$$

- Selecting the channel **j** whose value of current position **P** is maximum, as follows:

$$j = \arg\max(P_i)$$

This method, therefore, selects the channel whose counter **D** is minimum, i.e., whose current quality of transmission is most infrequently lower than the past quality of transmissions (in the time window **T**). In other words, for a channel to be selected, only the fact that its quality of transmission has decreased less frequently than others in the past time window is checked.

The aim of the present invention is to provide a new method for selecting a transmission channel within a Time Division Multiple Access (TDMA) communications system. The method pursues to be an alternative to known methods, which may overcome possible flaws in conventional methods such as the ones described herein.

**Brief description of the invention**

It is an object of the invention to define a method for selecting a transmission channel, within a series of transmission channels in a time division multiple access (TDMA) communications system, to which assign a specific timeslot for communication. As conventional methods, the method according to the invention comprises the steps of receiving the quality of transmission of each channel $C_i$ in each time slot, storing $C_i$ during a predefined time window **T** comprising a specific number of timeslots. Contrary to conventional methods, the method of the invention further comprises the step of selecting at least one channel that has the best current quality of transmission $C_i$ with respect to a function of the total decrease of quality of transmission between each timeslot of the time window **T** and the current timeslot.

The method according to the invention therefore provides certain new effects with respect to the prior art. The main effect is that, for a channel to be chosen, the channel must have an acceptable current quality of transmission and must not have had its quality decrease significantly during the time window **T**. In other words, qualitatively speaking, the channel must both have a relatively good current quality of transmission and be at its best. Therefore, a channel having not so good quality of transmission but having a low total decrease of quality of transmission (i.e., a quality of transmission that is as good as in the previous time window) could be assigned the timeslot instead of a channel having a better quality of transmission but whose quality of transmission had decreased compared to previous values.

**Detailed description of the invention**

The invention refers to a method for selecting a transmission channel, within a series of transmission channels **i** in a time division multiple access (TDMA) communications system, to which assign a specific timeslot for communication.

As in conventional methods, the selection is based on the quality of transmission of each channel and certain other parameters. More specifically, the method comprises the steps of receiving the quality of transmission of each channel $C_i$ in each time slot, and storing $C_i$ during a predefined time window $T$ comprising a specific number of timeslots. Further, the method according to the invention comprises the step of selecting at least one channel that has the best current quality of transmission $C_i$ with respect to a function of the total decrease of quality of transmission between each timeslot of the time window $T$ and the current timeslot.

Preferably, the method according to the invention comprises the steps of, in current timeslot $t$:

- For each channel $i$, resetting a counter $D$ to zero.

- Performing a loop, where for each loop index $k$ (where $k$ is from 1 to time window $T$), firstly, a test is made to check if the quality of transmission of the current timeslot is lower than the quality of transmission of a timeslot $k$-timeslots past away, as follows:

$$C_i(t-k) > C_i(t);$$

and, secondly, if the previous test result is true, the counter $D$ is incremented by the decrease of the quality of transmission between the timeslot $k$-timeslots past away and the current timeslot, scaled by a factor $f$ depending on $k$, $T$ and/or $B$, where $B$ is a constant from zero to one, as follows:

$$D_i = D_i + f(k,T,B)\left[C_i(t-k) - C_i(t)\right]$$

It must be noted that $C_i(t-k)$ is set to zero in case no $C_i$ data is available at time $t-k$ for user $i$.

In a specific embodiment, $D_i$ is incremented only if, in addition to the condition $C_i(t-k) > C_i(t)$, channel $i$ was selected at time $t-k$. This selection criterion disfavors channels that have already been selected and assigned a timeslot.

- Calculating the position $P$ for each channel i as the quotient of the current quality of transmission and the result of $(1-B)\cdot K_i + B\cdot D_i$, as follows:

$$P_i = \frac{C_i(t)}{(1-B)\cdot K_i + B\cdot D_i}$$

where $K_i$ is a selectable parameter.

- Selecting the channel $j$ whose value of current position $P$ is maximum, as follows:

$$j = \arg\max(P_i)$$

If there is more than one channel with the same maximum $P_i$, any arbitrary tie-breaking rule can be used to break the tie and select the active channel.

As an exception, if $B = 1$ and there exists at least two channels with $D_i$ equal to zero, then the channel $j$ which is selected is j = argmax $(C_i(t)/S_i)$ among the channels i having $D_i$ equal to zero, where $S_i$ is an estimation of the amount of data to be transferred by channel $i$. This favours channels that are expected to transmit small volumes of data, which is beneficial in reducing the number of active channels. It must be noted that the estimation of the amount of data $S_i$ is only used when nothing can be gained from the channel quality fluctuations, that is, when more than one channel are in their best channel state (and therefore have the same $D_i$). If said estimation $S_i$ is not available, then the channel j which is selected is j = argmax $(C_i(t))$.

In a preferred embodiment, factor $f(k, T, B)$ is a product comprising factor $1/T$. Using the factor $1/T$ allows for a more direct comparison of the method according to the invention with conventional methods such as the method A and the method B.

In a particularly advantageous manner, factor **f (k, T, B)** is equal to **1/T.** When the factor is equal to **1/T** then $D_i$ measures the average relative decrease of the channel quality in the time window **T.**

In a preferred embodiment, $K_i$ is an estimation of the average channel quality for channel i. This estimation is calculated the first time the channel requests to be assigned a timeslot, when $D_i$ equals zero (the first time a channel makes a request, there is no historical data available to allow calculating $D_i$). In this embodiment, **if $K_i$** proves to be a good estimation of the average quality for channel i, the calculation of **Pi** will return a result similar to that that would have been obtained if a long-term $D_i$ were available. In other words, this embodiment makes the method according to the invention not so dependant on the fact of having available historic data to calculate $D_i$. On another note, if no estimation is available or able to be calculated, then $K_i = 1$ can be assumed.

In a preferred embodiment, factor **f (k, T, B)** is a product comprising factor $B^k$. The factor $B^k$ weighs the importance of the past while measuring the quality of the channel in the present, i.e., the importance of the channel quality reduces as the **k** index (which measures the number of past time slots) increases.

The present method shows different effects compared to conventional method A, in which the counter **D** is calculated as the average quality of transmission during the time window **T** just before the current timeslot. This is due to the fact that, in the present invention, **D** does not depend on the value of the quality of transmission during the time window but on how much the value has decreased if comparing the time window values to the current values.

For example, supposing that f (k, T, B) = 1/T, a channel having a low but fairly constant quality of transmission, which would get a low **D** in conventional method A, would get an almost zero **D** in the method according to the invention. Therefore, a channel of the kind would lead to a very high position **P** in the present invention, it almost surely being chosen, this not being so in conventional method **A** In other words, the method according to the invention does not necessarily favor channels having a good (but not the best) quality of service but rather channels having a fairly constant quality of service, roughly speaking.

In another example, a link is assumed to be shared by two channels, whose stored quality of transmission values during a time window of **T** = 2 are respectively $C_1$(t-2) = 5, $C_1$(t-1) = 6, $C_1$(t) = 5.5 and $C_2$(t-2) = 1, $C_2$(t-1) = 10, $C_2$(t) = 5.5. It then follows that, for conventional method A, $P_1 = P_2 = 1$, whereas with the present invention, provided B = 1 and f (k, T, B) = 1/T, results **of P1= 11** and $P_2$ = 1.2 are obtained. Thus, conventional method A does not distinguish between these two channels, whereas the method according to the present invention chooses channel 1 and waits for channel 2 to have a high transmission value in subsequent slots.

The present invention also shows different effects compared to conventional method B, in which D is a counter which adds one for each timeslot in the time window whose quality of transmission is greater than the current quality of transmission. This is due to the fact that, in the present invention, the D parameter depends on how much the quality of transmission decreases whereas in the conventional method D only depends on if the quality of transmission decreases or not.

For example, a link is assumed to be shared by two channels, whose stored quality of transmission values during a time window of T = 2 are respectively $C_1$(t-2) = 1, $C_1$(t-1) = 10, $C_1$(t) = 2 and $C_2$(t-2) = 1, $C_2$(t-1) = 10, $C_2$(t) = 9. It then follows that, for conventional method B, $P_1 = P_2 = 1$, whereas with the method of the present invention, provided B = 1 and f (k, T, B) = 1/T, results **of $P_1$** = 1/2, $P_2$ = 18 are obtained. Thus, conventional method B does not distinguish between these two channels, whereas the method of the present invention chooses channel 2, because of the fact that it is in a very good state with respect to its own past.

**Claims**

1. Method for selecting a transmission channel within a series of transmission channels i that are demanding to be active for a specific time slot in a time division multiple access or TDMA communications system in which access is granted by time slots, the method comprising the steps of receiving the quality of transmission of each channel $C_i$ per time slot, and storing $C_i$ during a predefined time window T comprising a specific number of timeslots, the method being **characterized in** further comprising the step of, in current timeslot t:

   - selecting at least one channel that has the best current quality of transmission $C_i$ with respect to a function of the total decrease of quality of transmission between each timeslot of the time window **T** and the current timeslot.

2. Method according to claim 1, **characterized in that** it comprises the steps of:

   - for each channel **i,** resetting a counter **D** to zero;
   - performing a loop, where for each loop index **k,** where k is from 1 to time window **T,** firstly, a test is made to check if the quality of transmission of the current timeslot is lower than the quality of transmission of a timeslot **k-timeslots** past away, as follows:

$$C_i(t-k) > C_i(t) \, ;$$

and, secondly, if the previous test result is true, the counter **D** is incremented in the decrease of the quality of transmission between the timeslot **k-timeslots** past away and the current timeslot, scaled by a factor **f** depending on **k, T** and/or **B,** where **B** is a constant from zero to one, as follows:

$$D_i = D_i + f(k, T, B)\left[C_i(t-k) - C_i(t)\right]$$

- calculating the position **P** for each channel i as the quotient of the current quality of transmission and the result of **(1-B)·K_i+B·D_i**, as follows:

$$P_i = \frac{C_i(t)}{(1-B)\cdot K_i + B\cdot D_i}$$

where **K_i** is a selectable parameter,
- selecting at least the channel **j** whose value of current position **P** is maximum, as follows:

$$j = \arg\max\left(P_i\right)$$

3. Method according to claim 2, **characterized in that** factor **f** depending on **k, T** and/or **B** is a product comprising factor **1/T.**

4. Method according to claim 3, **characterized in that** factor **f** depending on **k, T** and/or **B** is equal to **1/T.**

5. Method according to claim 2, **characterized in that** factor **f** depending on **k, T** and/or **B** is a product comprising factor **B^k**.

6. Method according to claim 2, **characterized in that K_i** is an estimation of the average channel quality for channel **i.**

7. Method according to claim 2, **characterized in that K_i** = 1.

8. Method according to claim 2, **characterized in that** if **B =1,** and **in that** there exist at least two channels with **D_i** equal to zero, then the channel **j** which is selected **is j = argmax (C_i(t)/S_i)** among the channels **i** having **D_i** equal to zero, where **S_i** is an estimation of the amount of data to be transferred by channel **i.**

9. Method according to claim 8, **characterized in that** if estimation **S_i** is not available, then the channel **j** which is selected is **j = argmax (C_i(t))** among the channels **i** having **D_i** equal to zero

10. Method according to claim 2, **characterized in that D_i** is incremented only if, in addition to the condition **C_i(t-k) > C_i(t),** channel **i** was selected at time **t-k.**

**Patentansprüche**

1. Methode zur Auswahl eines Übertragungskanals von einer Reihe von Übertragungskanälen **i,** bei denen es notwendig ist, dass sie für einen spezifischen Zeitschlitz in einerm Zeitmultiplexverfahren oder TDMA-Kommunikationssystem aktiv sind, bei dem der Zugang durch Zeitschlitze vergeben wird, wobei die Methode die folgenden Schritte umfasst: Empfang der Übertragungsqualität jedes einzelnen Kanals **C_i** pro Zeitschlitz, und Speicherung des **C_i** während eines vorher definierten Zeitfensters **T,** das eine spezifische Anzahl an Zeitschlitzen umfasst. Die Methode zeichnet sich dadurch aus, dass sie zudem im aktuellen Zeitschlitz **t** folgenden Schritt umfasst:

- Auswahl von mindestens einem Kanal, der die beste aktuelle Übertragungsqualität **C$_i$** in Bezug auf eine Funktion des gesamten Rückgangs der Übertragungsqualität zwischen den einzelnen Zeitschlitze des Zeitfensters **T** und des aktuellen Zeitschlitz aufweist.

**2.** Methode nach Anspruch 1, **dadurch gekennzeichnet, dass** sie folgende Schritte umfasst:

- für jeden Kanal i, Zurücksetzen eines Zählers **D** auf null;
- Durchlaufen einer Schleife, wobei für jeden Schleifenindex **k,** bei dem **k** von **1** bis zum Zeitfenster **T** reicht, zuerst ein Test vorgenommen wird, um zu prüfen, ob die Übertragungsqualität des aktuellen Zeitschlitzes niedriger ist als die Übertragungsqualität eines Zeitschlitzes **k-Zeitschlitze** davor, und zwar wie folgt:

$$C_i(t-k) > C_i(t);$$

und zweitens, wenn das Ergebnis des vorangehenden Tests sich als wahr erweist, wird der Zähler **D** um den Rückgang der Übertragungsqualität zwischen dem Zeitschlitz **k-Zeitschlitze** davor und dem aktuellen Zeitschlitz erhöht, skaliert mit einen Faktor **f,** der von **k, T** und/oder **B** abhängt, wobei **B** eine Konstante von null bis eins ist, und zwar wie folgt:

$$D_i = D_i + f(k, T, B)[C_i(t-k) - C_i(t)]$$

- Berechnung der Position **P** für jeden Kanal **i** als Quotient der aktuellen Übertragungsqualität und dem Ergebnis von **(1-B) · K$_i$ + B-D$_i$,** und zwar wie folgt:

$$P_i = \frac{C_i(t)}{(1-B) \cdot K_i + B \cdot D_i}$$

wobei **K$_i$** ein wählbarer Parameter ist.
- Auswahl von mindestens dem **Kanal j,** dessen Wert in der aktuellen Position **P** der Maximalwert ist, und zwar wie folgt:

$$j = \operatorname{argmax}(P_i)$$

**3.** Methode nach Anspruch 2, **dadurch gekennzeichnet, dass** der Faktor **f,** der von **k, T** und/oder **B** abhängt, ein Produkt ist, das den Faktor **1/T** umfasst.

**4.** Methode nach Anspruch 3, **dadurch gekennzeichnet, dass** der Faktor **f,** der von **k, T** und/oder **B** abhängt, gleich **1/T** ist.

**5.** Methode nach Anspruch 2, **dadurch gekennzeichnet, dass** der Faktor **f,** der von **k, T** und/oder **B** abhängt, ein Produkt ist, das den Faktor **B$^k$** umfasst.

**6.** Methode nach Anspruch 2, **dadurch gekennzeichnet, dass K$_i$** eine Schätzung der durchschnittlichen Kanalqualität für den Kanal **i** ist.

**7.** Methode nach Anspruch 2, dadurch charakterisiert, dass **K$_i$ = 1 ist.**

8. Methode nach Anspruch 2, **dadurch gekennzeichnet, dass**, wenn B = 1 ist, und es mindestens zwei Kanäle mit $D_i$ gleich null gibt, der Kanal **j**, der ausgewählt wird, **j = argmax ($C_i$ (t)/$S_i$)** ist, und zwar unter denjenigen Kanälen **i**, bei denen $D_i$ gleich null ist, wobei $S_i$ eine Schätzung der von Kanal **i** zu übertragenden Datenmenge ist.

9. Methode nach Anspruch 8, **dadurch gekennzeichnet, dass**, wenn die Schätzung $S_i$ nicht zur Verfügung steht, der Kanal **j**, der ausgewählt wird, **j = argmax ($C_i$ (t))** ist, und zwar unter denjenigen Kanälen **i**, bei denen $D_i$ gleich null ist.

10. Methode nach Anspruch 2, **dadurch gekennzeichnet, dass** $D_i$ nur dann erhöht wird, wenn zusätzlich zu der Bedingung $C_i$ **(t-k)** > $C_i$ **(t)** der Kanal **i** in der Zeit **t-k** ausgewählt wurde.

## Revendications

1. Méthode pour sélectionner un canal de transmission parmi plusieurs canaux de transmission **i** qui demandent d'être actives pendant un intervalle de temps spécifique dans un accès multiple par répartition dans le temps ou système de communication **TDMA** dans lequel l'accès est accordé par intervalles de temps, la méthode comprenant les étapes de réception de la qualité de transmission de chaque canal $C_i$ par intervalle de temps, et de l'enregistrement de $C_i$ pendant une fenêtre de temps prédéfinie **T** comprenant un nombre spécifique d'intervalles de temps, la méthode étant **caractérisée par** l'inclusion ultérieure de l'étape de, dans l'intervalle de temps actuel **t** :

 - sélection d'au moins un canal qui a la meilleure qualité actuelle de transmission $C_i$ par rapport à une fonction de la réduction totale de qualité de transmission entre chaque intervalle de temps de la fenêtre de temps **T** et l'intervalle de temps actuel.

2. Méthode conformément la revendication 1, **caractérisée par le fait qu'**elle comprend les étapes de :

 - pour chaque canal **i**, réinitialisation d'un compteur **D** à zéro :
 - réalisation d'une boucle, où pour chaque index de boucle **k**, où **k** est de 1 à la fenêtre de temps **T**, d'abord, un test est réalisé pour vérifier si la qualité de transmission de l'intervalle de temps actuel est inférieure à la qualité de transmission d'un intervalle de temps **k-intervalles** passé, comme suit:

$$C_i(t-k) > C_i(t);$$

et, deuxièmement, si le résultat du test préalable est vrai, le compteur **D** est accru de la réduction de la qualité de transmission entre l'intervalle de temps **k-intervalles** passé et l'intervalle de temps actuel, mesuré par un facteur **f** dépendant de **k, T** et/ou **B,** où **B** est une constante de zéro à un, comme suit :

$$D_i = D_i + f(k,T,B)\left[C_i(t-k) - C_i(t)\right]$$

 - en calculant la position **P** pour chaque canal i comme le quotient de la qualité actuelle de la transmission et le résultat de **(1-B)-$K_i$+B·$D_i$** comme suit :

$$P_i = \frac{C_i(t)}{(1-B)\cdot K_i + B\cdot D_i}$$

où Ki est un paramètre sélectionnable,
 - en sélectionnant au moins le **canal j** dont la valeur de position actuelle P est maximale, comme suit :

$$j = \operatorname{argmax}(P_i)$$

3. Méthode conformément à la revendication 2, **caractérisée par le fait que** ce facteur **f** dépendant de **k, T** et/ou **B** est un produit comprenant un facteur **1/T.**

4. Méthode conformément à la revendication 3, **caractérisée par le fait que** ce facteur **f** dépendant de **k, T** et/ou **B** est égal à **1/T.**

5. Méthode conformément à la revendication 2, **caractérisée par le fait que** ce facteur **f** dépendant de **k, T** et/ou **B** est un produit comprenant un facteur **B$^k$.**

6. Méthode conformément à la revendication 2, **caractérisée par le fait que K$_i$** est une estimation de la qualité de canal moyenne pour le canal **i.**

7. Méthode conformément la revendication 2, **caractérisée par le fait que K$_i$ = 1.**

8. Méthode conformément à la revendication 2, **caractérisée par le fait que** si **B = 1,** et dans laquelle il existe au moins deux canaux avec **D$_i$** égal à zéro, alors la canal **j** qui est sélectionnée **est j = argmax (C$_i$(t)/S$_i$)** parmi les canaux **i** ayant **D$_i$** égal à zéro, où **S$_i$** est une estimation de la quantité de données à transférer par canal **i.**

9. Méthode conformément à la revendication 8, **caractérisée par le fait que** si l'estimation **S$_i$** n'est pas disponible, le canal **j** qui est sélectionné est **j = argmax (C$_i$(t))** parmi les canaux **i** ayant **D$_i$** égal à zéro.

10. Méthode conformément à la revendication 2, **caractérisée par le fait que D$_i$** n'est accru que si, en plus de la condition **C$_i$(t-k) > C$_i$(t)**, le canal **i** était sélectionnée au temps **t-k.**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6449490 B

- EP 1473957 A